# EUROPEAN PATENT APPLICATION

(11) **EP 4 016 690 A1**
(43) Date of publication of application: **22.06.2022**
(21) Application number: 21777000.7
(22) Date of filing: 26.01.2021
(51) Int. Cl.: H01M 10/0585, H01M 10/0562, H01M 10/0565, H01M 4/38, H01M 10/052

(54) **METHOD FOR MANUFACTURING LITHIUM METAL UNIT CELL FOR ALL-SOLID-STATE BATTERY, AND UNIT CELL MANUFACTURED THEREBY**

(30) Priority: 24.03.2020 KR 20200035639
(71) Applicant: LG ENERGY SOLUTION, LTD., Seoul 07335 (KR)
(72) Inventor: JUNG, Hye Ri, Daejeon 34122 (KR); CHOI, Lak Young, Daejeon 34122 (KR); HAN, Hyea Eun, Daejeon 34122 (KR); HAH, Hoe Jin, Daejeon 34122 (KR)
(74) Representative: Plasseraud IP
(86) International application number: PCT/KR2021/001006
(87) International publication number: WO 2021/194078

(57) **Abstract**

The present invention relates to a method of manufacturing a lithium metal unit cell for sulfide-based all-solid-state batteries and a unit cell manufactured using the same, and more particularly to a method of manufacturing a lithium metal unit cell for sulfide-based all-solid-state batteries wherein pressing is performed using cold isostatic pressing at higher than 100 MPa to lower than 470 MPa irrespective of time or pressing is performed at 470 MPa for 1 minute in order to reduce interface resistance of a sulfide-based all-solid-state battery using a lithium metal as a negative electrode and a unit cell manufactured using the same.

## Description

### [Technical Field]

This application claims the benefit of priority to Korean Patent Application No. 2020-0035639 filed on March 24, 2020, the disclosure of which is incorporated herein by reference in its entirety.

The present invention relates to a method of manufacturing a lithium metal unit cell for all-solid-state batteries and a unit cell manufactured using the same. More particularly, the present invention relates to a method of manufacturing a lithium metal unit cell for all-solid-state batteries capable of improving performance of the unit cell while reducing resistance of the unit cell at the time of assembling the unit cell in order to reduce interface resistance of an all-solid-state battery stack using a lithium metal as a negative electrode and a unit cell manufactured using the same.

### [Background Art]

A lithium ion secondary battery has higher energy density, a lower self-discharge rate, and a longer lifespan than a nickel manganese battery or a nickel cadmium battery, but has problems of low stability with respect to overheating, low output, and the like.

An all-solid-state battery has been suggested as a solution for solving the problems of the lithium ion secondary battery. The all-solid-state battery may be configured to have a structure in which a positive electrode layer including a solid electrolyte and a negative electrode layer including a solid electrolyte are formed on opposite surfaces of an electrolyte layer including a solid electrolyte and in which a current collector is bonded to each electrode.

Based on the raw material of the solid electrolyte, the all-solid-state battery may be classified as an oxide-based all-solid-state battery, a polymer-based all-solid-state battery, or a sulfide-based all-solid-state battery. The sulfide-based all-solid-state battery has attracted considerable attention, since the sulfide-based all-solid-state battery has higher lithium ion conductivity than the other batteries. The sulfide-based all-solid-state battery has higher ion conductivity and higher electric resistance between a positive electrode and a negative electrode than a liquid battery in spite of excellent properties thereof, whereby the sulfide-based all-solid-state battery has a shorter lifespan and lower output than a conventional battery using a liquid electrolyte.

In order to improve the lifespan and the output of a unit cell of the all-solid-state battery, a method of changing the kind of the positive electrode or the negative electrode and/or the solid electrolyte may be considered or an assembly method thereof may be changed. In particular, formation of a secondary battery using a lithium metal as the negative electrode is effective in increasing the lifespan of the unit cell in consideration of the fact that the lifespan of the unit cell depends on lithium content of the negative electrode.

In a conventional secondary battery using an electrolytic solution, the lithium metal is not used because of a safety-related problem due to reactivity of the lithium metal. In the case in which the solid electrolyte is used, however, it is possible to secure safety, since no electrolytic solution is used. In addition, growth of dendrites, which is generated when the lithium metal is used, has been inhibited through various research.

For a unit cell including a solid electrolyte, a positive electrode, the solid electrolyte, and a negative electrode are pressed in order to reduce interface resistance, whereby it is possible to improve performance of the unit cell. Unlike a conventional battery using copper or graphite as a negative electrode, however, the lithium metal has a soft temper, whereby the capacity, performance, and safety of the unit cell may be changed depending on pressing degree and time. Specifically, in the case in which the lithium metal is pressed at high pressure, the lithium metal and the solid electrolyte react with each other, whereby short circuit may occur in the cell. Therefore, it is important to solve this problem.

In Patent Document 1, a stack of a positive electrode, a solid electrolyte, and a negative electrode is pressed in order to improve conductivity, electron conductivity, and lithium ion conductivity; however, improvement in performance and safety of a unit cell using a lithium metal as the negative electrode is not considered.

In Patent Document 2, a stack of a positive electrode, a solid electrolyte, and a negative electrode is pressed in order to reduce interface resistance; however, improvement in performance and safety of a unit cell using a lithium metal as the negative electrode is also not considered.

Therefore, it is necessary to improve a manufacturing method in order to improve performance and safety of a unit cell of an all-solid-state battery using a lithium metal as a negative electrode.
(Patent Document 1) Japanese Patent Application Publication No. 2018-181451 (2018.11.15)
(Patent Document 2) Japanese Patent Application Publication No. 2019-200890 (2019.11.21)

### [Disclosure]

### [Technical Problem]

The present invention has been made in view of the above problems, and it is an object of the present invention to provide a novel manufacturing method capable of pressing a stack of a lithium metal, a solid electrolyte, and a positive electrode to manufacture a unit cell having excellent performance and improved safety and a unit cell manufactured using the same.

### [Technical Solution]

In order to accomplish the above object, the present invention provides a method of manufacturing a lithium metal unit cell for all-solid-state batteries, the method including (S1) stacking a lithium metal, a solid electrolyte, and a positive electrode to form a stack and (S2) pressing the stack at higher than 100 MPa to lower than 470 MPa for 1 minute to 30 minutes. Specifically, in the pressing step, the stack may be pressed at 300 MPa to 450 MPa for 1 minute to 15 minutes. More specifically, the pressing step may be replaced by a step of pressing the stack at 470 MPa for 1 minute.

In the method of manufacturing the lithium metal unit cell for all-solid-state batteries according to the present invention, the lithium metal, the solid electrolyte, and the positive electrode may be pressed at once in the pressing step.

In the pressing step, the stack may be pressed to a target level of pressure within 1 minute and may then be continuously pressed at the same pressure.

The pressing step may be performed using warm isostatic pressing (WIP) or cold isostatic pressing (CIP).

The cold isostatic pressing may be a wet-type cold isostatic pressing method.

The pressing step may be performed at normal temperature or at high temperature.

The lithium metal may include at least one of pure lithium, a lithium metal composite oxide, and a lithium alloy.

The solid electrolyte may include at least one of a sulfide-based solid electrolyte, an oxide-based solid electrolyte, and an organic solid electrolyte. In addition, the solid electrolyte may be a sulfide-based solid electrolyte.

The positive electrode may use at least one of stainless steel, aluminum, nickel, titanium, and aluminum or stainless steel surface-treated with carbon, nickel, titanium, or silver as a current collector.

In addition, the present invention provides a lithium metal unit cell for all-solid-state batteries manufactured using the method of manufacturing the lithium metal unit cell for all-solid-state batteries.

The lithium metal unit cell may be any one of a full cell, a C-type bi-cell, and an A-type bi-cell.

In addition, the present invention provides an electrode assembly including the lithium metal unit cell for all-solid-state batteries.

In the present invention, one or more constructions that do not conflict with each other may be selected and combined from among the above constructions.

### [Description of Drawings]

FIG. 1 is a graph showing porosity between a positive electrode and a solid electrolyte according to each of comparative examples and examples of the present invention and resistance of each of unit cells formed using the same.
FIG. 2 is a graph showing OCV values of unit cells according to the comparative examples and the examples of the present invention measured while pressing force and time are varied.
FIG. 3 is an enlarged view showing a portion having an OCV value of 2.4 or more in the graph of FIG. 2.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a preferred manufacturing example and examples will be presented together with the accompanying drawings in order to assist in understanding the present invention. This is provided only to illustrate the present invention, and the scope of the present invention is not limited thereby. Hereinafter, the present invention will be described in more detail.

The present invention includes (S1) a step of stacking a lithium metal, a solid electrolyte, and a positive electrode to form a stack.

### Lithium metal

The lithium metal may include at least one of pure lithium, a lithium alloy, and a lithium metal composite oxide. The lithium alloy may include any one selected from the group consisting of Al, Mg, K, Na, Ca, Sr, Ba, Si, Ge, Sb, Pb, In, and Zn. The lithium metal composite oxide may be a composite of lithium and an oxide (MeOₓ) of any one metal (Me) selected from the group consisting of Si, Sn, Zn, Mg, Cd, Ce, Ni, W, and Fe. As an example, the lithium metal composite oxide may be LiₓFe₂O₃(0<x≤1) or LiₓWO₂(0<x≤1).

The lithium metal according to the present invention may have a protective layer, as in a lithium metal used in a conventional secondary battery using an electrolytic solution. The protective layer may include any material as long as the material has lithium ion conductivity, does not interfere with the operation of a battery, and does not react with lithium. As an example, a garnet type ceramic protective layer, a protective layer formed of polyacrylic acid substituted by lithium, or a molybdenum disulfide-based protective layer may be provided. Any protective layer may be used as long as the protective layer improves safety of the lithium metal.

A pure lithium metal or a pure lithium alloy may be used as the lithium metal, or a negative electrode active material may be applied to the lithium metal and may be dried so as to be used.

In general, the lithium metal may be formed so as to have a thickness of 3 µm to 500 µm. A micro-scale uneven pattern may be formed on the surface of the lithium metal in order to increase the force of binding between the lithium metal and the negative electrode active material or the solid electrolyte, and the lithium metal may be configured in any of various forms, such as a film, a sheet, a foil, a net, a porous body, a foam body, or a non-woven fabric body.

As the negative electrode active material, for example, there may be used carbon, such as a non-graphitizing carbon or a graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); a lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; or a Li-Co-Ni based material.

### Solid electrolyte

The solid electrolyte may include at least one of a sulfide-based solid electrolyte, an oxide-based solid electrolyte, and an organic solid electrolyte. The solid electrolyte according to the present invention may be used in the state in which the surfaces of particles thereof are coated and reformed.

The sulfide-based solid electrolyte has a lithium ion conductivity of 10⁻² S/cm to 10⁻³ S/cm, which is high, is capable of easily forming a contact interface between the electrode and the electrolyte, and has high mechanical strength and mechanical flexibility. However, the sulfide-based solid electrolyte exhibits low safety in air, since the sulfide-based solid electrolyte has high moisture reactivity. In addition, the sulfide-based solid electrolyte has a problem in that a space charge layer is formed, whereby no high resistance layer is formed at the interface between the positive electrode and the electrolyte. In the present invention, the kind of the sulfide-based solid electrolyte is not particularly restricted, and all known sulfide-based materials used in the lithium battery field are possible. As an example, the sulfide-based solid electrolyte includes Li₆PS₅Cl (LPSCl), Thio-LISICON (Li_{3.25}Ge_{0.25}P_{0.75}S₄), Li₂S-P₂S₅-LiCl, Li₂S-SiS₂, LiI-Li₂S-SiS₂, LiI-Li₂S-P₂S₅, LiI-Li₂S-P₂O₅, LiI-Li₃PO₄-P₂S₅, Li₂S-P₂S₅, Li₃PS₄, Li₇P₃S₁₁, LiI-Li₂S-B₂S₃, Li₃PO₄-Li₂S-Si₂S, Li₃PO₄-Li₂S-SiS₂, LiPO₄-Li₂S-SiS, Li₁₀GeP₂S₁₂, Li_{9.54}Si_{1.74}P_{1.44}S_{11.7}Cl_{0.3}, and Li₇P₃S₁₁.

The oxide-based solid electrolyte exhibits high safety in air and has a lithium ion conductivity of 10⁻³ S/cm to 10⁻⁴ S/cm, which is lower than the lithium ion conductivity of the sulfide-based solid electrolyte but is relatively high. In addition, the oxide-based solid electrolyte exhibits high electrochemical safety and mechanical strength. However, oxidation voltage of the oxide-based solid electrolyte is high. In addition, grain boundary resistance of the solid electrolyte is high, it is difficult to form the contact interface between the electrode and the electrolyte, a high-temperature heat treatment process at 1000°C or higher is necessary, and enlargement thereof is difficult. In the present invention, the kind of the oxide-based solid electrolyte is also not particularly restricted, and all known oxide-based materials used in the lithium battery field are possible. As an example, the oxide-based solid electrolyte includes Perovskite, NASICON, LISICON, and Garnet (LLZO).

The organic solid electrolyte has advantages in that it is possible to easily form an electrode interface and dendrite growth is minimized, whereby reaction of the organic solid electrolyte with lithium metal is stable. However, the organic solid electrolyte has disadvantages in that the lithium ion conductivity of the organic solid electrolyte is low and the organic solid electrolyte can be used only at high temperatures. As an example, the organic solid electrolyte includes PEO.

In consideration of ion conductivity at normal temperature and production cost, a method of manufacturing a lithium metal unit cell for sulfide-based all-solid-state batteries according to the present invention and a unit cell manufactured using the same may use the sulfide-based solid electrolyte, the lithium ion conductivity of which is the highest.

The thickness of the solid electrolyte may be selected differently depending on the properties of a desired battery. As an example, the thickness of the solid electrolyte when being pressed for densification may be 0.1 µm to 1,000 µm, preferably 1 µm to 100 µm, more preferably 10 µm to 50 µm.

### Positive electrode

The positive electrode may be manufactured, for example, by applying a positive electrode mixture of a positive electrode active material constituted by positive electrode active material particles, a conductive agent, and a binder to a positive electrode current collector. A filler may be further added to the positive electrode mixture as needed.

In general, the positive electrode current collector is manufactured so as to have a thickness of 3 µm to 500 µm. The positive electrode current collector is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, or titanium. Alternatively, the positive electrode current collector may be made of aluminum or stainless steel, the surface of which is treated with carbon, nickel, titanium, or silver. Specifically, aluminum may be used. The positive electrode current collector may have a micro-scale uneven pattern formed on the surface thereof so as to increase the force of adhesion of the positive electrode active material. The positive electrode current collector may be configured in any of various forms, such as a film, a sheet, a foil, a net, a porous body, a foam body, or a non-woven fabric body.

In addition to the positive electrode active material particles, the positive electrode active material may be constituted, for example, by a layered compound, such as a lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, LiFe₃O₄, V₂O₅, or Cu₂V₂O₇; an Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a portion of Li in the chemical formula is replaced by alkaline earth metal ions; a disulfide compound; or Fe₂(MoO₄)₃. However, the present invention is not limited thereto.

The conductive agent is generally added so that the conductive agent accounts for 0.1 to 30 weight% based on the total weight of the compound including the positive electrode active material. The conductive agent is not particularly restricted as long as the conductive agent exhibits high conductivity without inducing any chemical change in a battery to which the conductive agent is applied. For example, graphite, such as natural graphite or artificial graphite; carbon black, such as acetylene black, Ketjen black, channel black, furnace black, lamp black, or summer black; conductive fiber, such as carbon fiber or metallic fiber; metallic powder, such as carbon fluoride powder, aluminum powder, or nickel powder; conductive whisker, such as a zinc oxide or potassium titanate; a conductive metal oxide, such as a titanium oxide; or a conductive material, such as a polyphenylene derivative, may be used as the conductive agent.

The binder included in the positive electrode is a component assisting in binding between the active material and the conductive agent and in binding with the current collector. The binder is generally added in an amount of 0.1 to 30 weight% based on the total weight of the compound including the positive electrode active material. In the present invention, the binder is not particularly restricted, and any known binder may be used. For example, the binder may be any one or a mixture of two or more selected from the group consisting of polyamide-imide (PAI), polyimide (PI), polyamide (PA), polyamic acid, polyethylene oxide (PEO), polystyrene (PS), poly(ethylene-co-propyleneco-5-methylene-2-norbornene) (PEP-MNB), polyvinylidene fluoride (PVDF), poly(vinylidene fluoride-co-hexafluoropropylene) (PVDF-HFP), polystyrene nitrile-butadiene rubber (PS-NBR), poly(methacrylate)nitrile-butadiene rubber (PMMA-NBR), and a mixture thereof.

The surface of the positive electrode active material may be coated with a material, such as LiNbO₃, to form a buffer layer. The buffer layer may be formed so as to have a thickness of 10 nm or less using a buffer layer forming material in order to inhibit the interface resistance between the positive electrode and the solid electrolyte.

### Formation of stack

In the method of manufacturing the lithium metal unit cell for sulfide-based all-solid-state batteries according to the present invention, the lithium metal, the solid electrolyte, and the positive electrode mentioned above are sequentially stacked to form a stack. The stack may include at least one lithium metal, at least one solid electrolyte, and at least one positive electrode. As an example, the stack may be a stack constituting a full cell consisting of a lithium metal/a solid electrolyte/a positive electrode, a stack constituting a C-type bi-cell consisting of a lithium metal/a solid electrolyte/a positive electrode/a solid electrolyte/a lithium metal, or a stack constituting an A-type bi-cell consisting of a positive electrode/a solid electrolyte/a lithium metal/a solid electrolyte/a positive electrode.

The method of manufacturing the lithium metal unit cell for sulfide-based all-solid-state batteries according to the present invention includes (S2) a step of pressing the stack at higher than 100 MPa to lower than 470 MPa for 1 minute to 30 minutes after formation of the stack.

The pressing step may be performed through warm isostatic pressing (WIP) or cold isostatic pressing (CIP).

Warm isostatic pressing is a process of applying isostatic pressure to the stack at high temperature in order to process the stack. In many cases, gas, such as argon, is generally used as a pressure medium. Cold isostatic pressing is a method of placing the stack in a mold having low shape resistance, such as a rubber bag, in a hermetically sealed state and applying uniform nondirectional pressure to the surface of the stack using hydraulic pressure. It is preferable to use the cold isostatic pressing, which has lowest reactivity with a medium, although all isostatic pressing methods may be used in the method of manufacturing the lithium metal unit cell for sulfide-based all-solid-state batteries according to the present invention.

In the case in which the cold isostatic pressing is used, the stack is placed in a packing material, such as a laminate, is evacuated, and is pressed by the cold isostatic pressing.

The cold isostatic pressing is classified as a dry type method or a wet type method. The wet type method is a method of filling a mold with a powder type stack outside a high-pressure container, hermetically sealing the mold, directly depositing the mold in a pressure medium in the high-pressure container, and applying uniform isostatic pressure to the outer surface of the mold in order to press the stack, and the dry type method is a method of applying pressure to a high-pressure container through a pressing rubber mold installed to seal a pressure medium to press a stack received in a pressing rubber mold by filling. For pressing, it is preferable to use a material that does not react with a lithium metal or a sulfide-based solid electrolyte as a pressing medium.

It is preferable to use the wet type cold isostatic pressing method, which is capable of accurately performing pressing using a desired level of pressure, as the cold isostatic pressing.

In the pressing step, the stack of the lithium metal, the solid electrolyte, and the positive electrode is pressed at once. It is preferable to perform the pressing step and the stacking step in the state in which the stack of the solid electrolyte and the positive electrode is successfully sealed. The reason for this is that, since the cold isostatic pressing is performed through the medium of water, it is necessary to reduce reactivity of the sulfide-based solid electrolyte, which has great reactivity with water. In addition, it is preferable to perform the cold isostatic pressing at normal temperature or at high temperature in order to reduce reactivity between the lithium metal and the solid electrolyte.

In the pressing step, the stack may be pressed to a target level of pressure within 1 minute and may then be continuously pressed at the same pressure. In the case in which this time is excessively long, uniform pore formation and performance may not be obtained, whereby a unit cell defect rate may be increased.

In the pressing step, pressing may be performed at higher than 100 MPa to lower than 470 MPa for 1 minute to 30 minutes. In addition, the pressing step may further include performing pressing at 470 MPa for 1 minute. In the case in which the pressure is lower than 100 MPa, the resistance of the unit cell is excessively high, whereby it is difficult for the unit cell to exhibit desired performance. In the case in which pressing is performed at 470 MPa for 15 minutes or longer, the performance of the unit cell is greatly reduced depending on the pressing time, and it is not possible to obtain a unit cell having a desired capacity.

Specifically, in the pressing step, the stack may be pressed at 300 MPa to 450 MPa for 1 minute to 15 minutes.

This can also be seen through pressing experiments according to comparative examples and examples below.

### <Experimental Example>

In each of the examples according to the present invention and the comparative examples, first, 1) a sulfide-based solid electrolyte and a positive electrode were stacked on a lithium metal to form a stack.

At this time, a pure lithium metal was used as the lithium metal. In addition, a sulfide-based solid electrolyte including Thio-LISICON (Li_{3.25}Ge_{0.25}P_{0.75}S₄) was used as the sulfide-based solid electrolyte, and a positive electrode slurry obtained by mixing LiNi_{0.8}Co_{0.1}Mn_{0.1}O₂ (nickel: cobalt: manganese = 8:1:1, GS EM, GL80) as a nickel-cobalt-manganese-based positive electrode active material, carbon black, polyvinylidene fluoride (PVDF) with N-methyl-2-pyrrolidone (NMP) at a weight ratio of 97:1.5:1.5 was coated on aluminum foil to a thickness of 20 µm so as to be used as the positive electrode.

After step 1), 2) the stack was pressed using wet type cold isostatic pressing at the pressure according to each of the examples and the comparative examples for 1 minute, 15 minutes, and 30 minutes.

At this time, the stack was fixed and was placed in a zipper bag, and then the zipper bag was sealed in order to prevent permeation of moisture. Subsequently, the zipper bag having the stack received therein was placed in a base chamber configured to perform wet type cold isostatic pressing, and was pressed.

In step 2), pressing was performed at 200 MPa for 1 minute, 15 minutes, and 30 minutes in the case of Example 1, pressing was performed at 300 MPa for 1 minute, 15 minutes, and 30 minutes in the case of Example 2, pressing was performed at 400 MPa for 1 minute, 15 minutes, and 30 minutes in the case of Example 3, pressing was performed at 450 MPa for 1 minute, 15 minutes, and 30 minutes in the case of Example 4, and pressing was performed at 470 MPa for 1 minute in the case of Example 5. Pressing was performed at 0 MPa for 1 minute, 15 minutes, and 30 minutes in the case of Comparative Example 1, pressing was performed at 100 MPa for 1 minute, 15 minutes, and 30 minutes in the case of Comparative Example 2, pressing was performed at 470 MPa for 15 minutes and 30 minutes in the case of Comparative Example 3, pressing was performed at 490 MPa for 1 minute, 15 minutes, and 30 minutes in the case of Comparative Example 4, and pressing was performed at 500 MPa for 1 minute, 15 minutes, and 30 minutes in the case of Comparative Example 5.

3) The resistance, porosity, and OCV value of the stack pressed in step 2) were measured.

For the resistance value, a unit cell formed using the stack was charged to an SOC of 80%, and the resistance value thereof was measured using Solartron analytical EIS in a charged state under conditions of a frequency of 10 MHz to 0.6 MHz and an AC amplitude of 10 mA.

The porosity was measured by measuring the thickness of the stack before and after pressing and converting the thickness of the positive electrode excluding the thicknesses of the lithium metal and the solid electrolyte layer before and after pressing.

For the OCV value, 1) a step of assembling the stack according to each of the examples and the comparative examples and 2) a step of leaving the assembled stack at 60°C for 30 minutes were performed, and then the OCV value of the stack was measured using a multimeter (HIOKI).

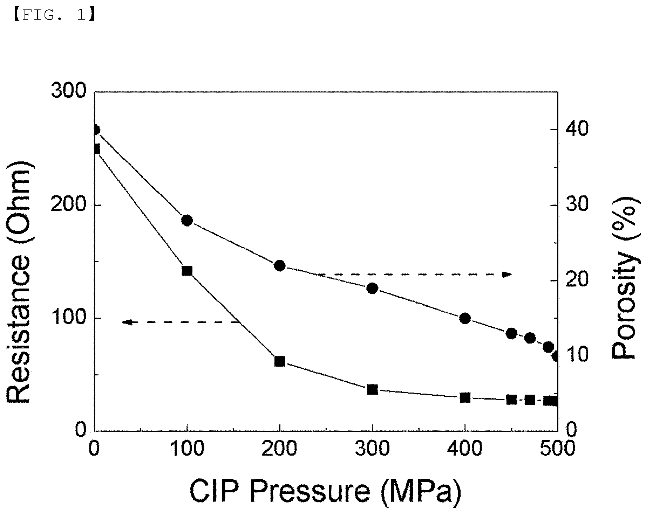

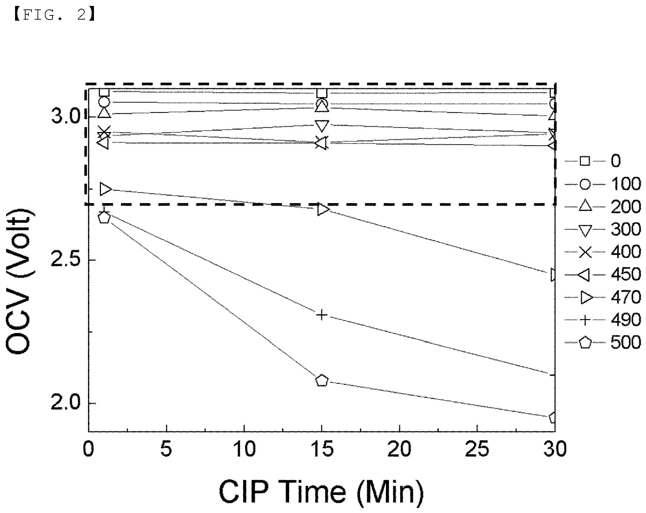

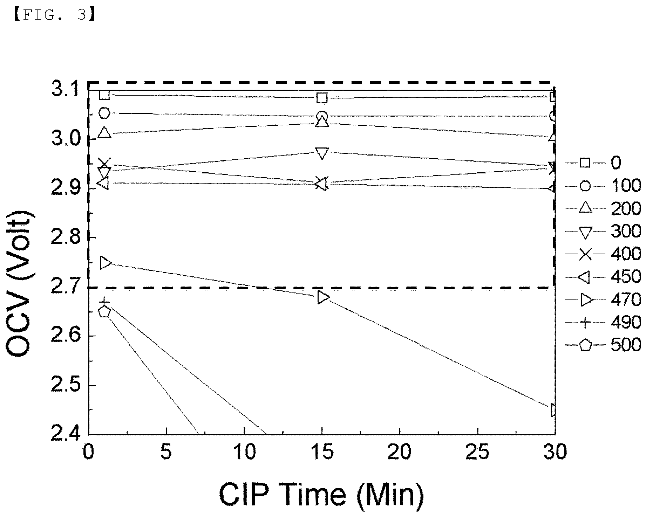

Table 1 is a comparison table showing porosity between the positive electrode and the solid electrolyte of each of the stacks according to Examples 1 to 5 and Comparative Examples 1 to 5 and resistance of each of the unit cells according to Examples 1 to 5 and Comparative Examples 1 to 5. FIG. 1 is a graph showing porosity between the positive electrode and the solid electrolyte according to each of the comparative examples and the examples of the present invention and resistance of each of the unit cells formed using the same. Table 2 is a comparison table showing the OCV value of each of the unit cells formed according to Examples 1 to 5 and Comparative Examples 1 to 5. FIG. 2 is a graph showing the OCV value of each of the unit cells according to the comparative examples and the examples of the present invention measured while pressing force and time are varied. FIG. 3 is an enlarged view showing a portion having an OCV value of 2.4 or more.

**[Table 1]**

| | CIP Pressing (MPa) | Resistance (Ω) | Porosity (%) |
|---|---|---|---|
| Comparative Example 1 | 0 | 250 | 40 |
| Comparative Example 2 | 100 | 142 | 28 |
| Example 1 | 200 | 62 | 22 |
| Example 2 | 300 | 37 | 19 |
| Example 3 | 400 | 30 | 15 |
| Example 4 | 450 | 28 | 13 |
| Example 5 | 470 | 27.9 | 12.4 |
| Comparative Example 3 | 470 | 27.9 | 12.4 |
| Comparative Example 4 | 490 | 27.3 | 11.2 |
| Comparative Example 5 | 500 | 27 | 10 |

Referring to FIG. 1, a graph having circular dots joined to each other indicates the porosity, and a graph having square dots joined to each other indicates the resistance value. As can be seen from Table 1 and FIG. 1, these values were reduced as the applied pressure was increased.

Therefore, it can be seen that the resistance and porosity of the unit cell are affected by pressure. In particular, it can be seen from Example 5 and Comparative Example 3 that, when the same pressure is applied, the same result values are obtained irrespective of the pressing time. The same results are obtained for the other examples and the other comparative examples, and therefore it can be seen that resistance and porosity are not affected by pressing time.

**[Table 2]**

| | CIP Pressing (MPa) | OCV (V) | OCV (V) | OCV (V) |
|---|---|---|---|---|
| | | 1 min. | 15 min. | 30 min. |
| Comparative Example 1 | 0 | 3.091 | 3.085 | 3.087 |
| Comparative Example 2 | 100 | 3.054 | 3.047 | 3.048 |
| Example 1 | 200 | 3.012 | 3.034 | 3.005 |
| Example 2 | 300 | **2.935** | **2.975** | 2.946 |
| Example 3 | 400 | **2.95** | **2.913** | 2.942 |
| Example 4 | 450 | **2.912** | **2.91** | 2.901 |
| Example 5 | 470 | 2.75 | - | - |
| Comparative Example 3 | 470 | - | 2.68 | 2.45 |
| Comparative Example 4 | 490 | 2.67 | 2.31 | 2.1 |
| Comparative Example 5 | 500 | 2.65 | 2.08 | 1.95 |

It can be seen from Table 1 above and FIGS. 2 and 3 that, in the method of manufacturing the lithium metal unit cell for sulfide-based all-solid-state batteries, the OCV value is proper irrespective of time when the pressing force is lower than 470 MPa. In addition, it can be seen that the OCV value exceeds 2.7 V in the case in which pressing is performed at 470 MPa for 1 minute. However, it can be seen that, for Comparative Example 3, in which pressing is performed at 470 MPa for 15 minutes or longer and in the case in which a pressure of 470 MPa or higher is applied, the OCV value is greatly reduced as pressing time is increased. This is a phenomenon occurring since the lithium metal reacts with the solid electrolyte, and it can be seen that, even in the case in which the same pressure is applied, reactivity between the lithium metal and the solid electrolyte is increased depending on pressing time. In addition, it can be seen that, in the case in which OCV value is less than 2.7 V, a possibility of short circuit occurring in the unit cell is abruptly increased, whereby safety of the unit cell is greatly reduced.

The present invention may be a lithium metal unit cell for all-solid-state batteries manufactured using the above method. In addition, the lithium metal unit cell for all-solid-state batteries may be any one of a full cell, a C-type bi-cell, and an A-type bi-cell. In addition, the present invention may be an electrode assembly including the lithium metal unit cell for all-solid-state batteries.

In addition, the present invention provides a battery pack including the unit cell and a device including the battery pack as a power source. Specifically, the battery pack may be used as a power source for a device requiring the ability to withstand high temperature, long cycle characteristics, high rate characteristics, etc. Preferred examples of the device may include a mobile electronic device, a wearable electronic device, a power tool driven by a battery-powered motor, an electric vehicle (EV), a hybrid electric vehicle (HEV), a plug-in hybrid electric vehicle (PHEV), and an energy storage system. However, the present invention is not limited thereto.

The structure and manufacturing method of the device are well known in the art to which the present invention pertains, and thus a detailed description thereof will be omitted.

Although the present invention has been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and technical idea of the present invention, and it will be obvious that such changes and modifications fall within the scope of the appended claims.

### [Industrial Applicability]

The present invention provides a method of pressing a stack of a lithium metal, a solid electrolyte, and a positive electrode to manufacture a unit cell having excellent performance. In particular, the present invention provides a method of manufacturing a unit cell configured such that the interface resistance between lithium metal, a solid electrolyte, and a positive electrode is reduced, whereby the unit cell has higher performance than a conventional unit cell, and the lithium metal and the solid electrolyte do not react with each other.

In addition, it is possible to secure safety of the unit cell while improving performance of the unit cell irrespective of pressing time, whereby it is possible to manufacture the unit cell through a simple process. In addition, a unit cell defect rate is reduced, which is advantageous in an economic aspect.

## Claims

1. A method of manufacturing a lithium metal unit cell for all-solid-state batteries, the method comprising:
(S1) stacking a lithium metal, a solid electrolyte, and a positive electrode to form a stack; and
(S2) pressing the stack at higher than 100 MPa to lower than 470 MPa for 1 minute to 30 minutes.

2. The method according to claim 1, wherein the pressing step (S2) is replaced by a step of pressing the stack at 470 MPa for 1 minute.

3. The method according to claim 1, wherein, in the pressing step, the lithium metal, the solid electrolyte, and the positive electrode are pressed at once.

4. The method according to claim 1, wherein, in the pressing step, the stack is pressed to a target level of pressure within 1 minute and is then continuously pressed at the same pressure.

5. The method according to claim 1, wherein the pressing step is performed using warm isostatic pressing (WIP) or cold isostatic pressing (CIP).

6. The method according to claim 5, wherein the cold isostatic pressing is a wet-type cold isostatic pressing method.

7. The method according to claim 1, wherein the pressing step is performed at normal temperature or at high temperature.

8. The method according to claim 1, wherein the lithium metal comprises at least one of pure lithium, a lithium metal composite oxide, and a lithium alloy.

9. The method according to claim 1, wherein the solid electrolyte comprises at least one of a sulfide-based solid electrolyte, an oxide-based solid electrolyte, and an organic solid electrolyte.

10. The method according to claim 1, wherein the positive electrode uses at least one of stainless steel, aluminum, nickel, titanium, and aluminum or stainless steel surface-treated with carbon, nickel, titanium, or silver as a current collector.

11. A lithium metal unit cell for all-solid-state batteries manufactured using the method according to any one of claims 1 to 10.

12. The lithium metal unit cell according to claim 11, wherein the lithium metal unit cell is any one of a full cell, a C-type bi-cell, and an A-type bi-cell.

13. An electrode assembly comprising the lithium metal unit cell according to claim 11.
